# EUROPEAN PATENT APPLICATION

(11) **EP 1 182 879 A2**
(43) Date of publication of application: **27.02.2002**
(21) Application number: 01300373.6
(22) Date of filing: 17.01.2001
(51) Int. Cl.: H04N 7/24

(54) **Communication system**

(30) Priority: 18.08.2000 KR 2000047808
(71) Applicant: SAMSUNG ELECTRONICS CO., LTD., Suwon-City, Kyungki-do (KR)
(72) Inventor: Ahn, Jun-ho, Kangnam-gu, Seoul (KR); Lee, Chang-ki, Seongbuk-gu, Seoul (KR); Kim, Hee-jung, Yangcheon-gu, Seoul (KR)
(74) Representative: Geary, Stuart Lloyd

(57) **Abstract**

A communication system, useful for television advertising, comprises first node which broadcasts a signal including a predetermined data element and a second node which receives the broadcast signal and extracts the data element. A third node (420) receives the extracted data and passes it on to a fourth node (410) which processes it with similar data and sends the results to a fifth node (430).

## Description

The present invention relates communication method comprising broadcasting a first signal from a first node and receiving said first signal at a second node.

In conventional television advertising, after an advertiser makes an advertisement contract with a broadcasting station, an advertising broadcast for advertising a company or product is produced and then the broadcast is transmitted by a broadcasting station. It is then hoped that television viewers will watch the advertising broadcast between television programmes.

Therefore, there is no scope for the active participation of viewers in the process and little to encourage viewers to watch adverisements. Also, advertisers cannot objectively calculate the audience rating and the effect of advertisements.

A method according to the present invention is characterised by including a predetermined data element in said first signal, extracting said data element at the second node, transferring data, derived from said data element, from the second node to a third node, transmitting data, derived from said transferred data, from said third node to a fourth node via a data network, and receiving said transmitted data at the fourth node and transmitting a signal to a fifth node in dependence thereon.

In the context of television advertising, the first node would be a television station, the second node would be a television receiver, the third node would be a computer at a shop, the fourth node would be a monitoring system and the fifth node would be an advertiser's computer. The data element would be an electronic coupon, or E-coupon, from the owner of the advertiser's computer which would enable the view of the television receiver to obtain a discount on the purchase of goods or services from the shop. The details of the electronic coupon are transmitted to the monitoring system which collates and reports the use of electronic coupons to the advertiser's computer.

Preferably, said transferred data is transferred from the second node to the third node by physically conveying a data carrier containing said transferred data. Said data carrier may be a smart card or a sheet having indicia printed thereon.

Preferably, a method according to the present invention includes determining the time of receipt of said data element and recording an indication thereof on or in said data carrier and said transferred data includes said recorded time of receipt indication.

Preferably, a method according to the present invention includes reading data programmed into the apparatus used to receive said broadcast signal and recording said read data on or in said data carrier and said transferred data includes said read data. More preferably, the method comprises programming said apparatus with said read data during manufacture thereof.

Preferably, said smart card is read at the third node for producing said transmitted data.

A method according to the present invention may include:
receiving said broadcast signal at a sixth node and a seventh node, and extracting said data element therefrom;
transferring data, derived from said data element, from the sixth node to a seventh node;
transmitting data, derived from said transferred data from the sixth node, from said seventh node to said fourth node via a data network,
wherein said signal transmitted to said fifth node is generated in dependence on said data transmitted from the seventh node.

Preferably, said signal transmitted to said fifth node is generated in dependence on a plurality of instances of said transmitted data from the third node and/or the seventh node.

Preferably, a method according to the present invention includes generating at the fifth node, in dependence on said signal transmitted to the fifth node, a first banking system input signal configured to cause a banking system to debit a first account and credit a second account.

Preferably, a method according to the present invention includes generating at the fourth node, in dependence on said data transmitted from the third node, a second banking system input signal configured to cause a banking system to debit the second account and credit a third account.

Preferably, a method according to the present invention includes generating at the fourth node, in dependence on said data transmitted from the third node, third banking system input signal configured to cause a banking system to debit the second account and credit a fourth account.

Thus, the present invention can be used to route payments to shopkeepers who have given discounts on the basis of electronic coupons and compensate television manufacturers for the increased cost of producing televisions with means for extracting the electronic coupon from a broadcast signal.

According to the present invention, there is provided a broadcast receiving apparatus, e.g. a digital television, for use as the second node, the apparatus comprising:
a tuner for tuning to said broadcast signal;
a recording means for recording data in or on a data carrier; and
signal processing means for extracting said data element from the output of the tuner and operating said recording means in dependence on said data element to record data derived therefrom in or on a data carrier.

The recording means preferably comprises a printer or means for writing data to a smart card.

According to the present invention, there is provided an apparatus for use as the fourth node, the apparatus comprising:
network communication means for receiving data from said third node and transmitting data to said fifth node;
database means for storing said data received from the third node; and
processing means configured for extracting and processing information from the database means to generate said signal transmitted to the fifth node. The apparatus may be configured to store data from a plurality of instances of said third node in the database, wherein the processing means is configured to extract and process information from the database means to generate signals for transmission to a plurality of instances of said fifth node on the basis on a fifth node instance identifier in said data received from the third node instances.

The apparatus may comprise:
network communication means for receiving data from said third node and transmitting data to said fifth node and a banking system;
database means for storing said data received from the third node; and
processing means configured for extracting and processing information from the database means to generate said signal transmitted to the fifth node and for generating, in dependence on said data transmitted from the third node, a banking system input signal configured to cause a banking system to debit said second account and credit said third account.

The apparatus may comprise:
network communication means for receiving data from said third node and transmitting data to said fifth node and a banking system;
database means for storing said data received from the third node; and
processing means configured for extracting and processing information from the database means to generate said signal transmitted to the fifth node and for generating, in dependence on said data transmitted from the third node, a banking system input signal configured to cause a banking system to debit said second account and credit said fourth account.

An embodiment of the present invention will now be described, by way of example, with reference to the accompanying drawings, in which:
Figure 1 is a block diagram for illustrating the relationships between the parties using apparatus according to the present invention;
Figure 2 is a block diagram of a broadcast transmitting apparatus of a broadcasting station;
Figure 3 is a block diagram of a broadcast receiving apparatus;
Figure 4 is a block diagram of a network embodying the present invention; and
Figure 5 is a flowchart of a network operating method which is performed in the server of a payment company in a system according to the present invention.

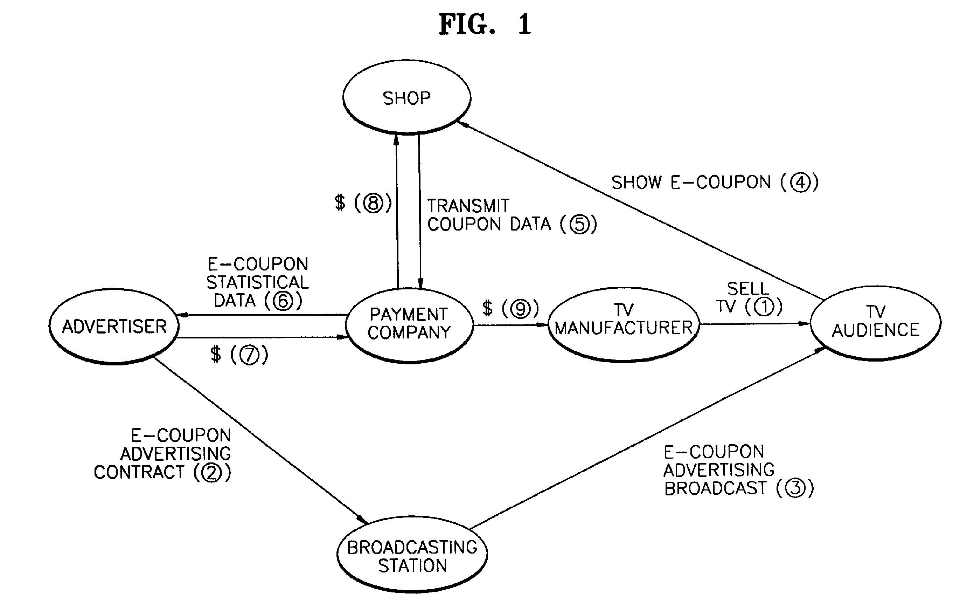

Referring to Figure 1, a scenario in which the technical characteristics of the present invention may usefully be employed will now be explained.

A television manufacturer manufactures a television which has a smart card installed for extracting and storing electronic coupon data inserted in an advertising broadcast by electronic coupon data broadcasting means. The television is sold to a consumer (a television viewer) (①). Information on the television manufacturer is also stored in the smart card so that the television manufacturer can receive a portion of an advertising fee as compensation for the increased manufacturing cost of the television from a payment company.

An advertiser makes an electronic coupon broadcast advertising contract with a broadcasting station (②). According to the contract, the broadcasting station transmits an electronic coupon advertising broadcast which is produced according to the contract (③).

A television viewer watches an electronic coupon advertising broadcast on the television which has the smart card for storing electronic coupon information. When watching the electronic coupon advertising broadcast, if the viewer wants to receive an electronic coupon, the viewer inputs an electronic coupon download command, using a key input means such as a remote control. Then the electronic coupon data, which is included in the received advertising broadcast, is stored in the smart card installed in the television.

After storing the electronic coupon data, the television viewer detaches the smart card from the television. When he buys the advertised product or service, the television viewer can show the electronic coupon for a discount to a shopkeeper, or gives the a hard copy of the electronic coupon information, printed by means of a printer installed in the television, to the shopkeeper (④).

In the shop, information from the electronic coupon, which the shopkeeper has received from the smart card or the hard copy is sent to the server of the payment company (⑤). The server of the payment company analyzes and statistically processes the input electronic coupon information and stores the result in a database, and at a predetermined time interval, sends the details of advertising fee, including statistical data of electronic coupons and discount amount, to the advertiser (⑥).

Then, the advertiser pays the discount amount and advertising fee to the payment company (⑦), preferably by electronic means, e.g. sending an electronic message to a banking system, and then the payment company pays, preferably by electronic means, a portion of the discount amount and the advertising fee, which the company received from the advertiser, to the shop and the television manufacturer.

Therefore, the advertiser can objectively calculate the audience rating and advertisement effect of the advertising broadcast, and make television viewers actively participate in the advertisement to raise the effect of the advertisement. Since the viewers can receive discount coupons for products they wish to buy through the television advertising broadcast, viewers can obtain a financial benefit. The payment company can receive advertising fees from the advertiser and can manage an advertisement consulting business, utilizing the accumulated electronic coupon data. Also, the television manufacturer can receive payment, and therefore all related parties in the advertising system can reap financial benefits.

Apparatuses required for building an advertising system for the electronic coupon data broadcast will now be explained.

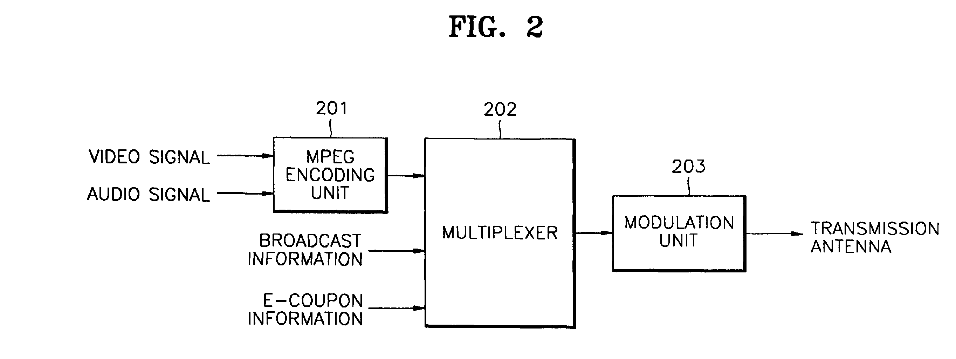

Referring to Figure 2, a broadcast transmitting apparatus has an MPEG encoding unit 201, a multiplexer 202 and a modulation unit 203.

A video signal and an audio signal to be broadcasted are encoded respectively by the MPEG encoding unit 201.

The multiplexer 202 multiplexes the encoded video data and audio data, broadcast information data which is about the broadcast programme, and electronic coupon information data according to a broadcasting standard. Then, the multiplexed data is modulated in the modulating unit 203 and transmitted as an space wave via a transmission antenna.

Using this television broadcast transmitting apparatus, an advertising broadcast including electronic coupon data can be transmitted.

A broadcast receiving apparatus for receiving an advertising broadcast including electronic coupon data will now be explained.

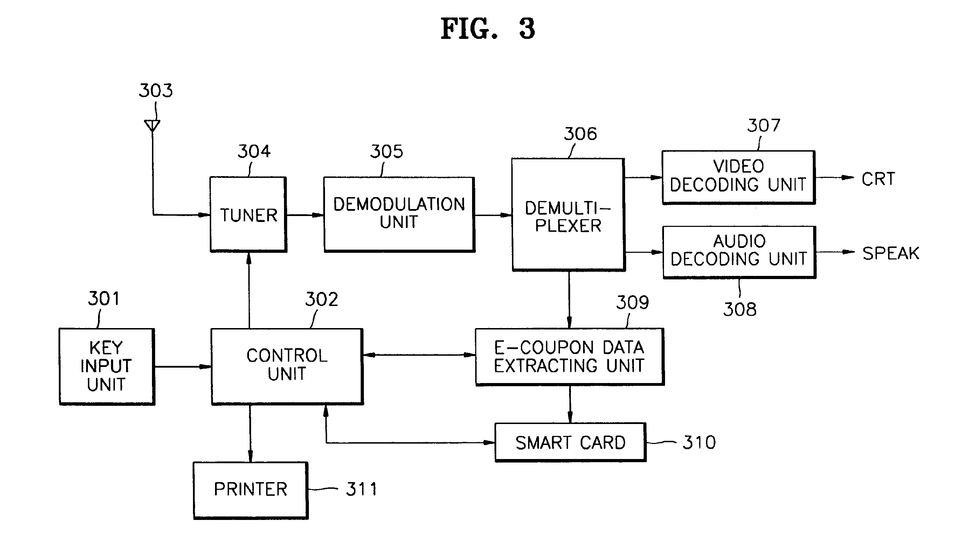

As shown in Figure 3, the broadcast receiving apparatus includes a key input unit 301, a control unit 302, an antenna 303, a tuner 304, a demodulation unit 305, a demultiplexer 306, a video decoding unit 307, an audio decoding unit 308, an electronic coupon data extracting unit 309, a smart card 310 and a printer 311.

When a desired channel is selected after the television power is turned on using the key button of the key input unit 301, the control unit 302 controls the tuner 304 so that the broadcast signal of the channel selected by a user is tuned to. The selected broadcast signal is demodulated in the demodulation unit 305, and divided into individual bit streams of video, audio, and additional information via the demultiplexer 306, and then output to the video decoding unit 307, the audio decoding unit 308 and the electronic coupon data extracting unit 309 respectively.

Then, the video decoding unit 307 and the audio decoding unit 308 decode the divided video bit stream and audio bit stream, and output the same via a Braun tube (CRT) and a speaker respectively.

The electronic coupon data extracting unit 309 extracts only the electronic coupon data included in the received additional information.

When the television viewer wishes to receive an electronic coupon when watching the electronic coupon data advertising broadcast, he inputs an electronic coupon download command using the key input unit 301. Then, according to the control command from the control unit 302, the electronic coupon data output from the electronic coupon data extracting unit 309 is stored in the smart card 310.

The electronic coupon information stored in the smart card 310 can be printed on paper, using the printer 311. Also, the smart card can be designed to be detachable. In this case, when the viewer presents the smart card storing the electronic coupon data to a shopkeeper, the electronic coupon can be read in a smart card reader kept in the shop.

A method for operating the advertising system using the electronic coupon data broadcast through the Internet will now be explained.

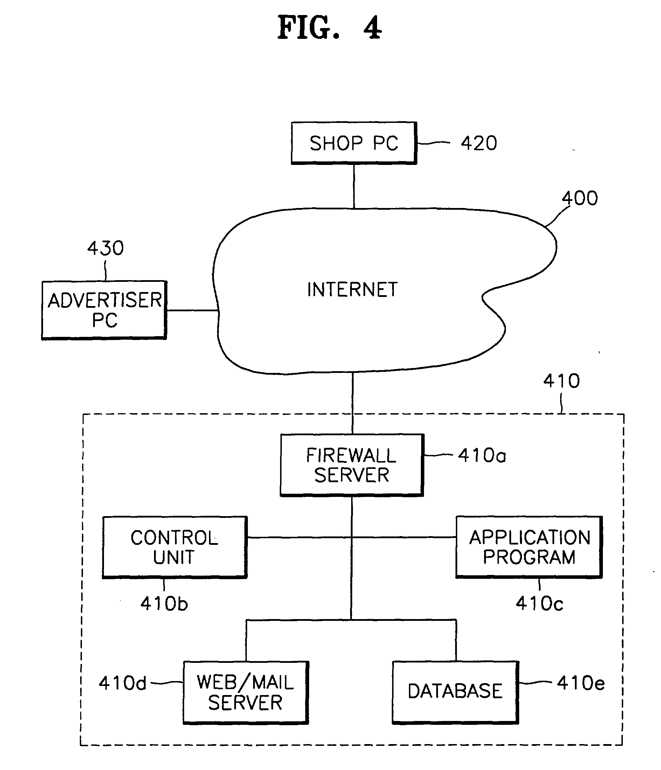

As shown in Figure 4, an advertising system using the electronic coupon data broadcast is connected through the Internet 400 and includes a payment company server 410, a shop computer 420 and an advertiser computer 430.

In order for the users of the shop computer 420 and advertiser computer 430 to receive the Internet services, they must be assigned Internet protocol (IP) addresses and use Internet link software such as a point-to-point protocol (PPP), and then, using the addresses, they can receive the Internet services through world wide web (WWW) browsers. In order to receive the WWW service the users access the server of a desired web site, using a web browser such as Netscape Navigator and Microsoft Internet Explorer, to get desired information. If the shop computer 420 and advertiser computer 430 are connected to the communication network through a dedicated line instead of a modem, the shop computer 420 and advertiser computer 430 are linked to the Internet, using TCP/IP protocol without the need for PPP.

In this way, the shop computer 420 and the advertiser computer 430 are linked to the payment company server 410, which is one among many web site servers throughout the Internet 400.

The payment company server 410 further includes a firewall 410A, a control unit 410B, an application program 410C, a web/mail server 410D and a database 410E.

The operations of the elements forming the payment company server 410 will now be explained.

The firewall 410A is formed of hardware and software for protecting the payment company's LAN and servers and prevents the inflow of harmful information from the outside when information is exchanged through the Internet. For example, an illegal outflow of inside information is prevented by a program for limiting external access, using an IP address, a user authentication number, a port number, etc.

The control unit 410B controls the system as a whole, including the management of the database 410E. Also, the control unit 410B connects the advertiser and electronic-coupon-using shops through one network, the Internet 400; provides electronic coupon advertisement service information requested through the Internet; analyzes electronic coupon data input from the shop computer 420; updates electronic coupon statistical data stored in the database 410E by performing statistical calculations on the corresponding electronic coupons; and executes a process for paying the advertising fee including discount amount according to the rules of a contract.

The application programs 410C are for executing various processes, including management of the database 410E, related to the electronic coupon advertising service provided from the payment company server 410 and are stored in a memory (not in drawings).

When the shop computer 420 or the advertiser computer 430 accesses the payment company server 410 through the Internet 400, the web/mail server 410D sends menu screen information for selecting and executing various processes provided in the present invention; operates an application program 410C corresponding to the selected menu and input data on the menu screen information; and sends information on the result of executing the corresponding process, to the shop computer 420 or the advertiser computer 430, using a transmission program commonly used in the Internet 400. Particularly, the mail server sends summed electronic coupon statistical data and advertising fee calculation information to the E-mail address of the advertiser at a predetermined time according to a transmission standard, and sends the contents corresponding to the request for various data to the requester's E-mail address.

The database 410E stores information on electronic coupons, the advertiser, the shop, the television manufacturer, diverse electronic coupon related statistical data, and advertising fee payment. That is, the control unit 410B performs analysis and statistical calculation, and updates electronic coupon statistical information stored in the database 410E. Information on the television manufacturer and the user read from the smart card is also stored in the database 410E, together with information on the shop which sent the electronic coupon data.

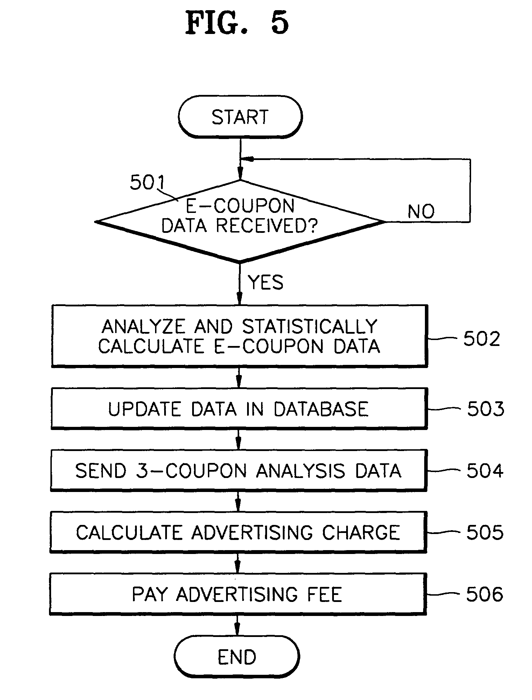

Referring to Figure 5, an electronic coupon advertising service method performed in the payment company server 410 of the present invention will now be explained.

The control unit 410B of the payment company server 410 determines whether or not electronic coupon data from the shop computer 420 of the shop which supports the electronic coupon is received in step 501. When electronic coupon data is received, the received electronic coupon data is analyzed and a corresponding statistical calculation is performed in step 502. That is, after dividing the received data into details, including the corresponding product name, information on electronic coupon downloading time, manufacturer information of the television through which the electronic coupon was downloaded, and other user information, a statistical calculation for obtaining the frequency of electronic coupon use in each item is performed.

Then, statistical data stored in the database 410E is updated with the statistically calculated information of the corresponding electronic coupon, which was analyzed in the step 502, in step 503.

Electronic coupon analysis data stored in the database 410E is read and edited and then repeatedly sent to the advertiser computer 430 based on a predetermined time interval, for example, every day, every week, or every month, in step 504. This is to allow the advertiser to independently analyze, the audience rating and advertising effect of the advertising broadcast, referring to the return rate of the electronic coupon advertisement.

Then, based on the electronic coupon statistical data stored in the database 410E, the advertising fee including discounted amount is calculated and sent to the advertiser computer 430 in step 505. Payment of advertising fee is settled by distributing some of the advertising fee paid by the advertiser, to the shopkeeper and the television manufacturer in step 506.

By means of the above-described method, viewer's participation in the advertising broadcast is promoted, the advertiser is allowed to objectively figure out the audience rating and advertising effect, and therefore some of the advertising revenue is distributed to the participants in the network so that the effect of the advertising can be maximized.

As described above, according to the present invention, using data broadcasting, a data advertising broadcast including electronic coupon information is transmitted from a broadcasting station. Taking the broadcast electronic coupon as a medium, the advertiser, the viewers, and the shop are connected in a network by the payment company. Then, utilizing electronic coupon information, the network is managed so as to generate advertising profits among the participants. By doing so, first, the advertiser can receive advertisement analysis data for objectively measuring the audience rating and advertising effect of the advertising broadcast. Second, since the transmission of bidirectional commercial advertisement increases utilization of advertisements, the broadcasting station benefits from increasing advertisement revenue. Third, the viewer can receive an electronic coupon (discount coupon) through the television advertisement. Fourth, the manufacturer of the digital broadcast receiver increases the sales of the television which stimulates purchasing desire with its new function, and can receive some of the advertising fee as compensation. Fifth, with the electronic coupon as a medium, the payment company can receive some of the advertising fee to increase its revenue, and can manage various advertisement consulting business, utilizing the accumulated electronic coupon data.

## Claims

1. A communication method comprising broadcasting a first signal from a first node and receiving said first signal at a second node, **characterised by** including a predetermined data element in said first signal, extracting said data element at the second node, transferring data, derived from said data element, from the second node to a third node (420), transmitting data, derived from said transferred data, from said third node (420) to a fourth node (410) via a data network (400), and receiving said transmitted data at the fourth node (410) and transmitting a signal to a fifth node (430) in dependence thereon.

2. A method according to claim 1, wherein said first signal is a television signal.

3. A method according to claim 2, wherein the television signal is a digital television signal.

4. A method according to claim 1, 2 or 3, wherein said transferred data is transferred from the second node to the third node (420) by physically conveying a data carrier (310) containing said transferred data.

5. A method according to claim 4, wherein said data carrier is a smart card (310).

6. A method according to claim 4, wherein said data carrier is a sheet having indicia printed thereon.

7. A method according to claim 4, 5 or 6, comprising determining the time of receipt of said data element and recording an indication thereof on or in said data carrier (310), wherein said transferred data includes said recorded time of receipt indication.

8. A method according to claim 4, 5 or 6, comprising reading data programmed into the apparatus used to receive said broadcast signal and recording said read data on or in said data carrier (310), wherein said transferred data includes said read data.

9. A method according to claim 8, comprising programming said apparatus with said read data during manufacture thereof.

10. A method according to 5, including reading said smart card (310) at the third node (420) for producing said transmitted data.

11. A method according to claim 11, including:
receiving said broadcast signal at a sixth node and a seventh node, and extracting said data element therefrom;
transferring data, derived from said data element, from the sixth node to a seventh node (420);
transmitting data, derived from said transferred data from the sixth node, from said seventh node (420) to said fourth node (41) via a data network (400),
wherein said signal transmitted to said fifth node (430) is generated in dependence on said data transmitted from the seventh node (420).

12. A method according to any preceding claim, wherein said signal transmitted to said fifth node (430) is generated in dependence on a plurality of instances of said transmitted data from the third node (420) and/or the seventh node (420).

13. A method according to any preceding claim, comprising generating at the fifth node (430), in dependence on said signal transmitted to the fifth node (430), a first banking system input signal configured to cause a banking system to debit a first account and credit a second account.

14. A method according to any preceding claim, comprising generating at the fourth node (410), in dependence on said data transmitted from the third node (420), a second banking system input signal configured to cause a banking system to debit the second account and credit a third account.

15. A method according to any preceding claim, comprising generating at the fourth node (410), in dependence on said data transmitted from the third node, third banking system input signal configured to cause a banking system to debit the second account and credit a fourth account.

16. A broadcast receiving apparatus for use as the second node in a method according to any preceding claim, the apparatus comprising:
a tuner (304) for tuning to said broadcast signal;
a recording means (309, 311) for recording data in or on a data carrier (310); and
signal processing means (309) for extracting said data element from the output of the tuner (304) and operating said recording means (309, 311) in dependence on said data element to record data derived therefrom in or on a data carrier (310).

17. An apparatus according to claim 16, wherein the recording means is a printer (311).

18. An apparatus according to claim 16, wherein the recording means comprises means (309) for writing data to a smart card.

19. A television receiver according to claim 16, 17 or 18.

20. A digital television receiver according to claim 16, 17 or 18.

21. An apparatus for use as the fourth node (410) in a method according to any one of claims 1 to 15, the apparatus comprising:
network communication means (410a, 410d) for receiving data from said third node (420) and transmitting data to said fifth node (430);
database means (410e) for storing said data received from the third node (420); and
processing means (410c) configured for extracting and processing information from the database means (410e) to generate said signal transmitted to the fifth node (430).

22. An apparatus according to claim 21, configured to store data from a plurality of instances of said third node (420) in the database, wherein the processing means (410c) is configured to extract and process information from the database means (410e) to generate signals for transmission to a plurality of instances of said fifth node (430) on the basis on a fifth node instance identifier in said data received from the third node instances (420).

23. An apparatus for use as the fourth node (410) in a method according to any one of claim 14, the apparatus comprising:
network communication means (410a, 410d) for receiving data from said third node (420) and transmitting data to said fifth node (430) and a banking system;
database means (410e) for storing said data received from the third node (420); and
processing means (410c) configured for extracting and processing information from the database means (410e) to generate said signal transmitted to the fifth node (430) and for generating, in dependence on said data transmitted from the third node (420), a banking system input signal configured to cause a banking system to debit said second account and credit said third account.

24. An apparatus for use as the fourth node in a method according to any one of claim 15, the apparatus comprising:
network communication means (410a, 410d) for receiving data from said third node (420) and transmitting data to said fifth node (430) and a banking system;
database means (410e) for storing said data received from the third node (420); and
processing means (410c) configured for extracting and processing information from the database means (410e) to generate said signal transmitted to the fifth node (430) and for generating, in dependence on said data transmitted from the third node (420), a banking system input signal configured to cause a banking system to debit said second account and credit said fourth account.

25. An advertising system using an E-coupon data broadcast, the advertising system comprising:
a shop computer for transmitting data related to the E-coupon presented by a buyer, to a payment company server through a network; and
the payment company server for executing a process in which data related to the E-coupon transmitted from the shop computer is analyzed; a statistical calculation of the corresponding E-coupon is performed and the result is stored in a database; advertisement statistics information on the E-coupon accumulated in the database is transmitted to an advertiser computer; based on the advertisement statistics information, an advertising fee including discount amount is calculated, and the advertising fee is paid by the advertiser; and the discount amount is paid to the shopkeeper.

26. The advertising system of claim 25, wherein the E-coupon is included in a digital advertising broadcast and then transmitted, and information on the E-coupon is stored in a smart card connected to a digital broadcasting receiver according to a viewer's selection.

27. The advertising system of claim 26, wherein the smart card is designed to be detachable from the digital broadcasting receiver.

28. The advertising system of claim 26, wherein the digital broadcasting receiver has an internal printer for printing out information on the E-coupon stored in the smart card.

29. The advertising system of claim 26, wherein the smart card includes information on time for downloading the E-coupon, predetermined user information, and information on the manufacturer of the digital broadcasting receiver.

30. The advertising system of claim 25, wherein some of the advertising fee is paid to the manufacturer of the digital broadcasting receiver as compensation.

31. A payment company server of an advertising system using an E-coupon data broadcast, the payment company server comprising:
a database for storing information on the E-coupon, advertiser information, shop information, TV manufacturer information, various statistical information related to the E-coupon, and advertising fee payment information;
a control unit for controlling the system, as a whole, including management of the database; providing information on predetermined E-coupon advertising services after connecting the advertiser and E-coupon supporting shops in a network; and executing a process for analysis and statistical calculation of the E-coupon data input through the network, and a process for advertising fee payment according to a predetermined rule; and
a web/mail server for transmitting the execution result of a process related to the E-coupon advertising service processed in the control unit, to a user computer according to a transmission protocol commonly used in the network, in response to the request from the user computer connected through the network; and transmitting the execution result of the process to a designated address within a predetermined time.

32. A broadcast receiving apparatus using an E-coupon data broadcast,
a tuner for tuning and outputting a digital broadcasting signal of a channel selected by a user among digital broadcasting signals received via an antenna;
a demodulation unit for demodulating the digital broadcasting signal ouput from the tuner;
a demultiplexer for separately outputting video data, audio data, and additional information data in the demodulated digital broadcasting data output from the demodulation unit;
an E-coupon data extracting unit for receiving additional information data output from the demultiplexer and separately extracting E-coupon data;
a control unit for analyzing input key data, and when the key data is a key command for storing the E-coupon data, generating a command for downloading the E-coupon; and
a smart card for storing the E-coupon data output from the E-coupon data extracting unit when the command for downloading the E-coupon is applied.

33. The broadcast receiving apparatus of claim 32, wherein the smart card has a structure which is detachable from the E-coupon data broadcast receiving apparatus.

34. The broadcast receiving apparatus of claim 32, further comprising:
a printer for making a hard copy of the E-coupon data stored in the smart card.

35. The broadcast receiving apparatus of claim 32, wherein the smart card also stores information on time for downloading the E-coupon data.

36. The broadcast receiving apparatus of claim 32, wherein the smart card is designed so that user information can be registered according to a user's selection.

37. The broadcast receiving apparatus of claim 32, wherein the smart card is designed so that information on the manufacturer of the E-coupon data broadcast receiving apparatus can be registered.

38. An advertising method using an E-coupon data broadcast wherein a method for operating a payment company server of an advertising system using an E-coupon data broadcast comprises the steps of:
(a) receiving data related to the E-coupon presented by a buyer, from an E-coupon supporting shop through a network;
(b) analyzing data related to the E-coupon input in the step (a), performing a predetermined statistical calculation, and then storing the result in a database; and
(c) editing the E-coupon statistical data stored in the database and then transmitting the data to the advertiser through the network.

39. The advertising method of claim 38, wherein the E-coupon is a discount coupon, which the buyer downloads from an advertising broadcast which is transmitted from a broadcasting station and includes E-coupon information, using a smart card installed in an E-coupon data broadcast receiving apparatus.

40. The advertising method of claim 38, wherein the E-coupon is a discount coupon and, using a smart card installed in an E-coupon data broadcast receiving apparatus, the buyer downloads the discount coupon selectively from an advertising broadcast which is transmitted from a broadcasting station and includes E-coupon information, and then outputs the discount coupon via a printer.

41. The advertising method of claim 38, further comprising the step of:
calculating an advertising fee including discount amount based on E-coupon statistical data stored in the database; receiving the advertising fee from an advertiser; and then paying the received discount amount to the shop.

42. An advertising method using an E-coupon data broadcast wherein a shop computer operating method of an advertising system using an E-coupon data broadcast comprises the steps of:
(a) reading information on an E-coupon presented by a buyer;
(b) transmitting information on the E-coupon read in the step (a) to a payment company server; and
(c) receiving discount amount paid by the payment company server.
